## Europäisches Patentamt

## European Patent Office

## Office européen des brevets

(19)

(11) Veröffentlichungsnummer: **0 134 842**

**B1**

(12) **EUROPÄISCHE PATENTSCHRIFT**

(45) Veröffentlichungstag der Patentschrift:
25.10.89

(51) Int. Cl.⁴: **A 01 M 1/02, A 01 M 1/20**

(21) Anmeldenummer: **83113209.7**

(22) Anmeldetag: **29.12.83**

(54) Insektenfalle.

(30) Priorität: 30.12.82 IT 4631182

(43) Veröffentlichungstag der Anmeldung:
27.03.85 Patentblatt 85/13

(45) Bekanntmachung des Hinweises auf die Patenterteilung:
25.10.89 Patentblatt 89/43

(84) Benannte Vertragsstaaten:
AT BE CH DE FR GB IT LI LU NL SE

(56) Entgegenhaltungen:
DE-C-978
DE-C-44 470
FR-A-718 251
FR-A-1 205 186

(73) Patentinhaber: **Bacchi, Guido, Via Romea, 600, I-48020 Savio (Ravenna) (IT)**

(72) Erfinder: **Bacchi, Guido, Via Romea, 600, I-48020 Savio (Ravenna) (IT)**

(74) Vertreter: **Dost, Wolfgang, Dr.rer.nat., Dipl.- Chem., Patent- und Rechtsanwälte Bardehle- Pagenberg- Dost- Altenburg & Partner Postfach 86 06 20, D-8000 München 86 (DE)**

LIBER, STOCKHOLM 1989

## Beschreibung

Die Erfindung betrifft eine Vorrichtung zum Anlocken und Einfangen (unter Vernichtung durch Vergiftung) von für die Landwirtschaft schädlichen Insekten, jedoch unter Ausschluss von landwirtschaftlich nützlichen Insekten, z. B. Bienen.

Zu diesem Zweck beschreibt FR-A-1 205 186 eine Falle für die in der Landwirtschaft schädlichen Insekten, bestehend aus einem Behälter in Form einer Schale. Die Schale ist mit einem Deckel versehen, der eine trichterförmige Mittelöffnung aufweist. Diese Öffnung ermöglicht natürlich den Zutritt der Insekten von außen ins Innere des Behälters.

Die Merkmale des Oberbegriffs des begleitenden Anspruchs 1 sind in dem genannten Stand der Technik bekannt.

Die Erfindung ist in dem kennzeichnenden Teil des Anspruchs 1 definiert und schließt Merkmale ein, die Insekten zu täuschen, die ins Freie zurückkehren möchten.

Die Wirkung wird durch Verwendung eines Behälters von zylindrischer Form, der vorzugsweise aus durchsichtigem Plexiglas besteht, erzielt. Auf dem Behälter befindet sich ein kegelstumpfförmiger Deckel - ebenfalls vorzugsweise aus Plexiglas - der oben mit einer trichterförmigen Mittelöffnung versehen ist, die den Insekten den Zutritt von außen ins Innere des Behälters ermöglicht.

Dieser Behälter ist mit einer aromatisierten Flüssigkeit mit lähmender Wirkung beschickt.

Die gesamte Vorrichtung wird von einem bügelförmigen Rahmen, vorzugsweise aus nicht oxidierbarem Metall, getragen, der am äußersten oberen Ende mit einem Haken zum Aufhängen an Pflanzenzweigen versehen ist und an dessen Oberseite ferner eine konisch geformte Haube aus grünem Kunststoff, die als Sonnen- oder Regenschutz dient, fest angebracht ist.

Somit werden umherziehende Insekten, die von dem Aroma, das von der in der Schale befindlichen Flüssigkeit ausgeht und durch die im Deckel vorgesehene trichterförmige Öffnung nach außen gelangt, angelockt worden sind, in diesen Gang geleitet, bis sie in Kontakt mit der aromatisierten Flüssigkeit kommen, die zu ihrer Vernichtung dient.

Der Gegenstand der Erfindung wird nachstehend anhand des in der beigefügten Zeichnung dargestellten Ausführungsbeispiels näher erläutert.

Es zeigt:

Fig. 1    eine Seitenansicht der Falle;

Fig. 2    die Innenansicht des Deckels der Falle;

Fig. 3    eine Vorderansicht des Deckels nach Fig. 1

Fig. 4    eine Seitenansicht des Deckels nach Fig. 3; und

Fig. 5    eine Draufsicht auf einen Gang oberhalb des Deckels.

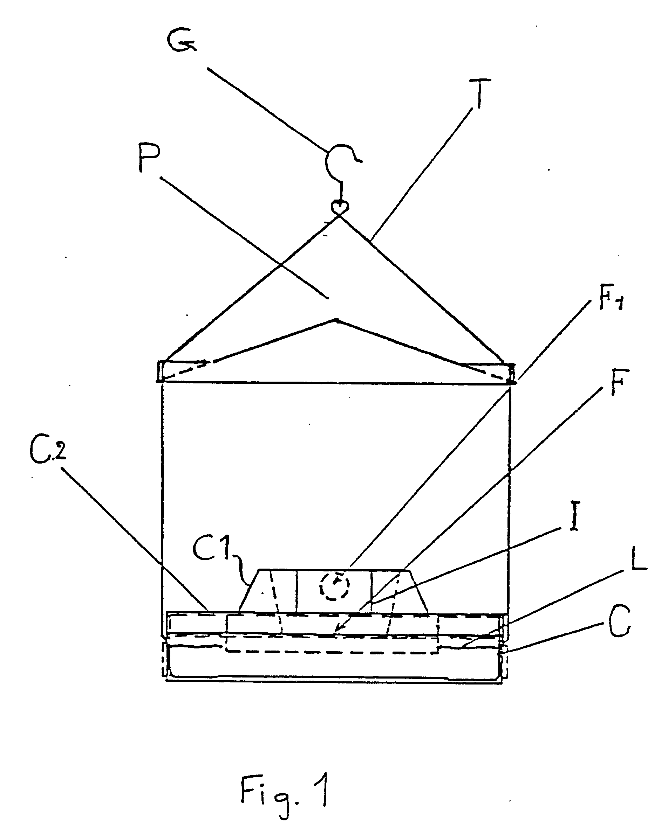

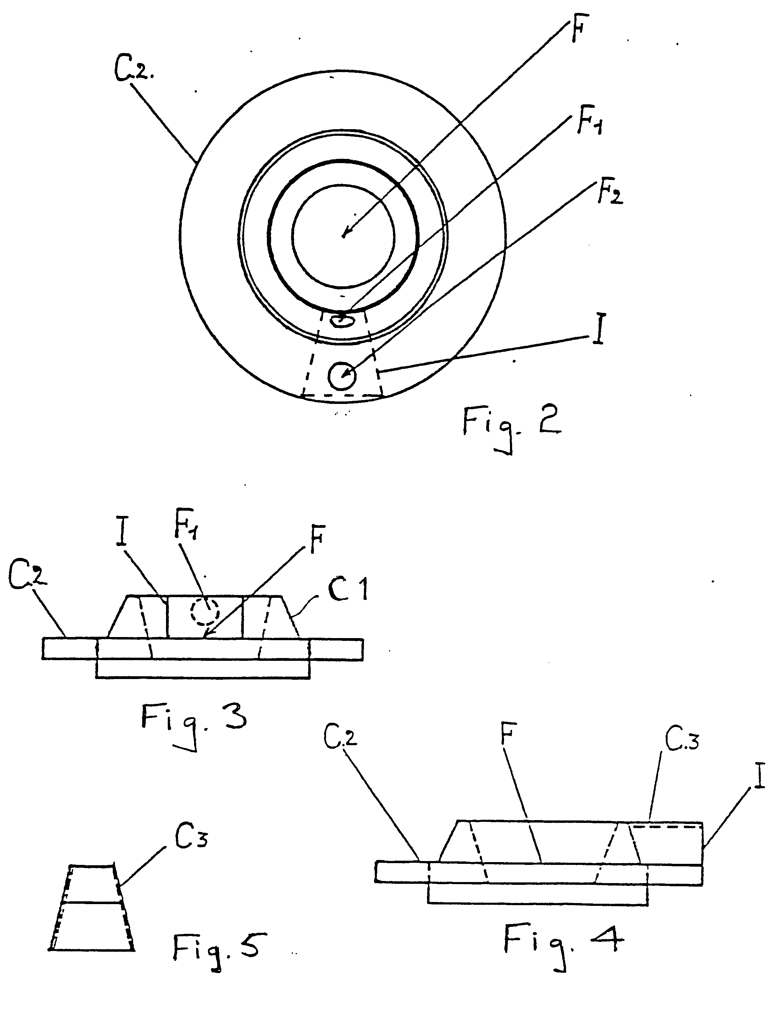

Fig. 1 bis 5 erläutern schematisch die Falle. Sie besteht aus einem Behälter in Form einer zylindrischen Schale C, die mit einem Deckel C2 versehen ist.

Die Schale enthält eine aromatische Flüssigkeit mit lähmender Wirkung. Das Niveau dieser Flüssigkeit ist mit L bezeichnet.

In Fig. 1 ist ein sich nach oben konisch verjüngender Kegelstumpf C1 des Deckels C2 dargestellt, und vom oberen Rand dieses Kegelstumpfes C1 reicht eine trichterförmige Mittelöffnung F nach unten, welche den Insekten einen ersten Zutritt zum Behälter ermöglicht.

In der Wand des Kegelstumpfes C1 ist ein Loch F1, das von der dem Inneren der Schale (C) zugewandten Seite des Kegelstumpfes (C1) zu einer Kammer I außerhalb des Kegelstumpfes führt. In dieser Kammer I befindet sich eine Öffnung F2, die durch den Deckel in den Behälter führt. Die Öffnung F2, die Kammer I und das Loch F1 dienen als zweiter Zutritt zum Behälter, um die Insekten zu täuschen, welche versuchen, aus dem Behälter nach außen zu gelangen.

Ein bügelförmiger Rahmen T, der mit einem Haken G und einem Sonnen- oder Regenschutz P ausgerüstet ist, trägt die Schale C.

## Patentansprüche

1. Falle für in der Landwirtschaft schädliche Insekten, bestehend aus einem Behälter in Form einer Schale (C), die mit einem Deckel (C2) versehen ist, der eine trichterförmige Mittelöffnung (F) aufweist, die sich nach unten erstreckt und die den Insekten einen Zutritt in den Behälter ermöglicht;

dadurch gekennzeichnet, das

die Schale (C) zylindrisch ist;

der Deckel (C2) einen sich nach oben konisch verjüngenden Kegelstumpf (C1) hat;

die Mittelöffnung (F) sich vom obersten Rand des Kegelstumpfes (C1) nach unten erstreckt;

sich in der Wand des Kegelstumpfes (C1) ein Loch (F1) befindet, das von der dem Inneren der Schale (C) zugewandten Seite des Kegelstumpfes (C1) zu einer Kammer (I) außerhalb des Kegelstumpfes führt;

von dieser Kammer (I) eine Öffnung (F2) durch den Deckel in den Behälter führt, so daß Insekten, die durch die Öffnung (F2) zu entkommen versuchen, durch die Kammer (I) und das Loch (F1) erneut zurück in die Schale des Behälters geführt werden können;

die Schale und der Deckel durchsichtig sind, und

die Schale eine aromatische Flüssigkeit mit lähmender Wirkung enthält.

2. Falle nach Anspruch 1, die mit einem bügelförmigen Rahmen mit einem daran angebrachten oberen Haken (G) versehen ist, wodurch sie getragen und an Pflanzenzweigen aufgehängt werden kann.

3. Falle nach Anspruch 2, bei der der bügelförmige Rahmen fest mit einer konisch geformten Haube (P) aus grünem Kunststoff versehen ist, die als Regen- oder Sonnenschutz für die Vorrichtung dient.

4. Falle nach Anspruch 1, 2 oder 3, bei der die Schale und der Deckel aus durchsichtigem Polymethylmethacrylat hergestellt sind.

## Claims

1. A trap for insects that are harmful to agriculture, comprising a receptacle in the form of a pot (C), having a cover (C2) with a funnel-shaped central opening (F) extending downwardly and acting as a first entrance for insects to the receptacle;
characterized in that
the receptacle (C) is cylindrical;
the cover (C2) has a truncated part (C1) reducing in size upwardly;
the central opening (F) extends downwardly from the uppermost edge of the truncated part (C1);
there is a hole (F1) in the wall of the truncated part (C1) that leads from that face of the truncated part (C1) that is directed towards the receptacle to a chamber (I) outside the truncated part;
a hole (F2) in the chamber (I) extends through the cover, so that insects that try to escape via the hole (F2) are led back to the pot through the chamber (I) and the opening (F1);
the pot and the cover are transparent; and
the pot contains an aromatic fluid having a paralysing effect.

2. A trap according to Claim 1 having a hanger shaped frame provided with an upper hook (G), whereby it can be carried and hung on the branches of plants.

3. A trap according to Claim 2 in which the hanger shaped frame is provided with a hood (P) of green plastics material serving as a shade for the apparatus against rain or sunshine.

4. A trap according to Claim 1, 2 or 3 in which the pot and the cover are made out of transparent polymethacrylate.

## Revendications

1. Piège pour insectes nuisibles pour l'agriculture, composé d'un récipient présentant la forme d'une cuvette (C) qui est munie d'un couvercle (C2), lequel présente une ouverture centrale (F) en forme d'entonnoir qui s'étend vers le bas et offre aux insectes un accès à l'intérieur du récipient, caractérisé en ce que:
- la cuvette (C) est cylindrique;
- le couvercle (C2) possède un tronc de cône (C1) qui se rétrécit avec une forme conique vers le haut;
- l'ouverture centrale (F) s'étend vers le bas à partir du bord supérieur du tronc du cône (C1);
- il est prévu, dans la paroi du tronc de cône (C1) un trou (F1) qui mène du côté du tronc de cône (C1) dirigé vers l'intérieur de la cuvette (C) à une chambre (I) située à l'extérieur du tronc de cône;
- de cette chambre (I) part une ouverture (F2) ménagée à travers le couvercle et qui conduit au récipient, de sorte que les insectes qui tentent de s'échapper à travers l'ouverture (F2) peuvent être à nouveau ramenés dans la cuvette du récipient par la chambre (I) et le trou (F1);
- la cuvette et le couvercle sont transparents; et
- le couvercle contient un liquide aromatique à effet paralysant.

2. Piège selon la revendication 1, qui est muni d'une monture en forme d'arceau sur laquelle est prévu un crochet supérieur (G), de sorte qu'il peut être porté et suspendu à des branches de végétaux.

3. Piège selon la revendication 2, dans lequel la monture en forme d'arceau est solidaire d'un capot (P) de forme conique, en matière plastique verte, qui sert de protection du dispositif contre la pluie ou le soleil.

4. Piège selon la revendication 1, 2 ou 3, dans lequel la cuvette et le couvercle sont fabriqués en polyméthacrylate de méthyle transparent.

Fig. 1

Fig. 2

Fig. 3

Fig. 5

Fig. 4